# EUROPÄISCHE PATENTSCHRIFT

(11) **EP 3 967 551 B1**
(45) Veröffentlichungstag und Bekanntmachung des Hinweises auf die Patenterteilung: **21.02.2024**
(21) Anmeldenummer: 21176901.3
(22) Anmeldetag: 31.05.2021
(51) Int. Cl.: B60Q 1/26

(54) **KRAFTFAHRZEUG-GRIFFEINRICHTUNG**
MOTOR VEHICLE DOOR HANDLE
DISPOSITIF DE PRÉHENSION POUR VÉHICULE AUTOMOBILE

(30) Priorität: 09.09.2020 DE 102020123473
(43) Veröffentlichungstag der Anmeldung: 16.03.2022
(73) Patentinhaber: HUF Hülsbeck & Fürst GmbH & Co. KG, 42551 Velbert (DE)
(72) Erfinder: Beck, Andreas, 44795 Bochum (DE); Schwarz, Marcel, 42548 Velbert (DE)
(74) Vertreter: Zenz Patentanwälte Partnerschaft mbB

(56) Entgegenhaltungen:
- FR-B1- 3 022 869
- JP-A- 2016 199 918
- US-A1- 2003 122 556
- US-A1- 2005 231 364
- US-A1- 2009 147 528
- US-A1- 2012 106 182
- US-A1- 2012 170 298

## Beschreibung

Die Erfindung richtet sich auf eine Kraftfahrzeug-Griffeinrichtung, aufweisend einen Griffkörper mit einem ersten Längsende, einem zweiten Längsende, wenigstens einer Ausnehmung und einem Aufnahmeraum, welcher an dem Griffkörper zwischen dem ersten Längsende und dem zweiten Längsende ausgebildet ist, ein Lichtmodul, welches innerhalb des Aufnahmeraumes untergebracht angeordnet ist und welches wenigstens einen in der wenigstens einen Ausnehmung angeordneten Lichtaustrittsbereich aufweist, und wenigstens ein Kabel, welches zumindest zur Übertragung von Energie dienend ausgebildet ist und welches mit dem Lichtmodul verbunden ist, wobei von dem ersten Längsende ein Lagerungsarm mit einem freien Ende, welches zur schwenkbaren Lagerung des Griffkörpers ausgebildet ist, abragt.

Eine Kraftfahrzeug-Griffeinrichtung der vorstehend beschriebenen Art ist zum Beispiel aus der DE 10 2013 112 835 A1 bekannt. Diese bekannte Kraftfahrzeug-Griffeinrichtung weist einen Griffkörper auf, welcher einen Aufnahmeraum und ein oder zwei Ausnehmungen aufweist. Innerhalb des Aufnahmeraumes ist im montierten Zustand ein Lichtmodul untergebracht, wobei das Lichtmodul einen Lichtaustrittsbereich oder zwei Lichtaustrittsbereiche aufweist. Ein jeweiliger Lichtaustrittsbereich ist dabei in der zugeordneten Ausnehmung des Griffkörpers angeordnet, so dass der Lichtaustrittsbereich des Lichtmoduls entweder für eine Griffmulden-Beleuchtung und/oder für eine Vorfeld-Beleuchtung dient. Von dem Griffkörper ragt ein Lagerungsarm ab, über welchen der Griffkörper zum Beispiel an einer Kraftfahrzeugtür schwenkbar gelagert ist. Zur Versorgung des Lichtmoduls mit Energie ist wenigstens ein Kabel vorgesehen, welches sich von dem in dem Aufnahmeraum untergebrachten Lichtmodul bis zu dem freien Ende des Lagerungsarms erstreckt und dort mit einem Stecker verbunden ist. Dabei erstreckt sich das wenigstens eine Kabel entlang des Lagerungsarms. Bei der Montage des Lagerungsarms an beispielsweise einem an einer Kraftfahrzeugtür befestigten Griffträger besteht die Gefahr, dass das wenigstens eine Kabel gequetscht und beschädigt wird, wobei diese Gefahr für das wenigstens eine Kabel bereits beim Einsetzen des Lichtmoduls in den Aufnahmeraum des Griffkörpers besteht. Für eine derartige Kraftfahrzeug-Griffeinrichtung ist es bekannt, mehrere Kabel mit einem Gewebeband zu ummanteln und dadurch zu bündeln, um diese vor einer Beschädigung zu schützen und zu führen. Allerdings stellt die Ummantelung des wenigstens einen Kabels einen zusätzlichen und aufwendigen Arbeitsschritt vor dem eigentlichen Zusammenbau des Griffkörpers und der eigentlichen Montage des Griffkörpers an dem Griffträger dar, was sich nachteilig auf den zeitlichen Arbeitsaufwand sowie auf die Zusatzmaterialkosten und folglich auf die Gesamtkosten der Kraftfahrzeug-Griffeinrichtung auswirkt.

Aus der FR 3 022 869 B1 ist eine Griffeinrichtung mit einem Griffkörper bekannt, wobei der Griffkörper ein erstes und zweites Längsende aufweist. Von dem ersten Längsende ragt ein Lagerungsarm mit einem freien Ende zur schwenkbaren Lagerung des Griffkörpers ab, wobei der Griffkörper einen Aufnahmeraum aufweist und in dem Lagerungsarm ein Kanal für ein Kabel ausgebildet ist.

Der Erfindung liegt die Aufgabe zugrunde eine Lösung zu schaffen, die auf konstruktiv einfache Weise eine verbesserte Kraftfahrzeug-Griffeinrichtung bereitstellt, durch welche die vorstehend genannten Nachteile vermieden werden und durch welche eine komfortable und gefahrlose Montage sowohl des Lichtmoduls an dem Griffkörper als auch der gesamten Kraftfahrzeug-Griffeinrichtung an einem Kraftfahrzeug möglich ist.

Bei einer Kraftfahrzeug-Griffeinrichtung der eingangs beschriebenen Art wird die Aufgabe erfindungsgemäß dadurch gelöst, dass in dem Lagerungsarm ein Kanal ausgebildet ist, welcher sich von dem Aufnahmeraum bis hin zu dem freien Ende des Lagerungsarms erstreckt und in welchem das wenigstens eine Kabel verlaufend angeordnet ist, und dass ein Kabelführungselement an dem Lichtmodul festgelegt ist und sich zumindest abschnittsweise in den Lagerungsarm hinein erstreckt, wobei der Kanal als eine schlitzförmige Aussparung mit einer Bodenwandung in dem Lagerungsarm ausgebildet ist, und wobei das Kabelführungselement abschnittsweise das wenigstens eine Kabel führt und derart ausrichtet, dass das wenigstens eine Kabel innerhalb des Kanals in der Aussparung geschützt verlaufend angeordnet ist.

Vorteilhafte und zweckmäßige Ausgestaltungen und Weiterbildungen der Erfindung ergeben sich aus den Unteransprüchen.

Durch die Erfindung wird eine Kraftfahrzeug-Griffeinrichtung zur Verfügung gestellt, welche sich durch eine einfache, aber höchst effiziente Konstruktion auszeichnet. Dadurch, dass in dem Lagerungsarm ein sich von dem Aufnahmeraum bis hin zu dem freien Ende des Lagerungsarms erstreckender Kanal ausgebildet ist, ist an dem Lagerungsarm ein Raum geschaffen, in welchem das wenigstens eine Kabel geschützt liegend angeordnet ist. Um zu verhindern, dass das wenigstens eine Kabel aus dem Kanal des Lagerungsarms hervorsteht, ist erfindungsgemäß zusätzlich das Kabelführungselement vorgesehen, welches sich abschnittsweise in den Lagerungsarm hinein erstreckt. Dabei ist es von besonderem Vorteil, dass das Kabelführungselement an dem Lichtmodul festgelegt ist. Denn dadurch muss das Kabelführungselement nicht separat an dem Griffkörper befestigt werden, was zu einem zusätzlichen Montage-Schritt führen würde. Vielmehr wird bei Montage des Lichtmoduls an dem Griffkörper gleichzeitig auch das Kabelführungselement vorteilhafterweise an dem Griffkörper in einem einzigen Montage-Schritt befestigt, so dass kein zusätzlicher Aufwand besteht. Dabei kann im Sinne der Erfindung ein "Festlegen" des Kabelführungselements an dem Lichtmodul eine lösbare Verbindung sein, mit welcher das Kabelführungselement beispielsweise über eine Schraubverbindung an dem Lichtmodul lösbar befestigt ist. Denkbar ist aber auch im Sinne der Erfindung, dass das "Festlegen" des Kabelführungselements an dem Lichtmodul eine einstückige Verbindung meint, bei welcher zum Beispiel das Kabelführungselement und das Lichtmodul als ein einziges Spritzguss-Teil einstückig hergestellt sind, so dass das Kabelführungselement an dem Lichtmodul angespritzt angeordnet ist und mit dem Lichtmodul ein einteiliges Bauteil darstellt. Durch die erfindungsgemäße Ausgestaltung des an dem Lichtmodul festgelegten Kabelführungselements ist auf wirksame Weise ein Einquetschen oder eine Beschädigung des wenigstens einen Kabels beim Einsetzen des Lichtmoduls mitsamt dem Kabelführungselement in den Griffkörper sowie bei Montage des Griffkörpers an einem Kraftfahrzeug verhindert, so dass insgesamt durch die Erfindung die Montage erleichtert wird.

Die Erfindung sieht in Ausgestaltung vor, dass das Kabelführungselement über eine lösbare Verbindung an dem Lichtmodul befestigt ist. Dabei kann die lösbare Verbindung zum Beispiel eine Schraubverbindung sein, wodurch es möglich ist, verschiedene Kabelführungselemente mit unterschiedlichen Lichtmodulen lösbar zu verbinden, so dass die Einheit aus Lichtmodul und Kabelführungselement für unterschiedliche Ausführungen von Griffkörpern von Kraftfahrzeug-Griffeinrichtungen nach Art eines Baukastenprinzips anpassbar ist.

Alternativ dazu ist in einer anderen Ausgestaltung der Erfindung vorgesehen, dass das Lichtmodul einen Grundkörper aufweist, an welchem das Kabelführungselement angespritzt angeformt ist. Hierzu kann ein Spritzguss-Verfahren verwendet werden, bei welchem das Kabelführungselement und das Lichtmodul als ein einziges Spritzguss-Teil einstückig hergestellt sind, so dass das Kabelführungselement an dem Lichtmodul angespritzt ist.

Eine weitere Alternative besteht in Ausgestaltung der Erfindung darin, dass das Lichtmodul einen Grundkörper aufweist, welcher zumindest abschnittsweise im Bereich des wenigstens einen Lichtaustrittsbereichs von einem transparenten Material ausgebildet ist. Das transparente Material stellt dabei einen Schutz für das Lichtmodul vor Beschädigung dar, wobei die Transparenz des Materials sicherstellt, dass das Licht zur Mulden- und/oder Vorfeld-Beleuchtung aus dem Lichtaustrittsbereich auch tatsächlich austreten kann. Dabei kann die einstückige Einheit aus Lichtmodul und Kabelführungselement mittels Mehrkomponenten-Spritzgießens hergestellt sein, wobei zum Beispiel das Lichtmodul aus einer ersten Komponente spritzgegossen ist und anschließend das Kabelführungselement aus einer zweiten Komponente spritzgegossen ist. Mit anderen Worten sieht die Erfindung hierbei vor, dass das Lichtmodul einen Grundkörper aufweist, welcher eine Schutzhülle ausbildet, wobei die Schutzhülle zumindest abschnittsweise im Bereich des wenigstens einen Lichtaustrittsbereichs von einem transparenten Material ausgebildet ist. Denkbar ist es auch, dass das transparente Material nicht vollständig, sondern nur abschnittweise an das Lichtmodul angespritzt ist.

Zur sichern Unterbringung und Führung des wenigstens einen Kabels sieht die Erfindung in Ausgestaltung vor, dass der Kanal als schlitzförmige Aussparung mit einer Bodenwandung in dem Lagerungsarm ausgebildet ist, wobei das Kabelführungselement mit einem ersten Schenkel, einem zweiten Schenkel, welcher sich parallel zu dem ersten Schenkel erstrecken kann, und einem Verbindungsschenkel, welcher den ersten Schenkel und den zweiten Schenkel miteinander verbindet, ausgebildet ist, und wobei das wenigstens eine Kabel zwischen der Bodenwandung und dem Verbindungsschenkel verlaufend angeordnet ist. Insbesondere ist das wenigstens eine Kabel zwischen dem Verbindungsschenkel, dem ersten Schenkel, dem zweiten Schenkel und der Bodenwandung angeordnet, so dass das wenigstens eine Kabel sicher innerhalb der schlitzförmigen Aussparung des Lagerungsarms angeordnet ist und ein Quetschen des wenigstens einen Kabels bei Montage der Kraftfahrzeug-Griffeinrichtung sicher verhindert ist.

Um eine derartige Anordnung des wenigstens einen Kabels zu realisieren, sieht die Erfindung in weiterer Ausgestaltung vor, dass im Querschnitt betrachtet der erste Schenkel eine Längserstreckung aufweist, welche größer ist als eine Längserstreckung des zweiten Schenkels, wobei der erste Schenkel an dem Lichtmodul festgelegt ist und wobei zwischen dem Lichtmodul und einem freien Ende des zweiten Schenkels ein Spalt ausgebildet ist. Durch diesen Spalt kann dann beispielsweise das wenigstens eine Kabel aus dem von dem Kabelführungselement und der Bodenwandung gebildeten Raum entnommen werden, sollte dies einmal zu Wartungs- oder Reparaturzwecken erforderlich werden.

Für eine stabile und genau definierte Festlegung sowie Positionierung des Kabelführungselements an dem Lichtmodul sieht die Erfindung in weiterer Ausgestaltung vor, dass das Lichtmodul mit einer Stufe ausgebildet ist, wobei der erste Schenkel zumindest abschnittsweise an der Stufe festgelegt ist.

Um den Bedienkomfort für einen Benutzer der erfindungsgemäßen Kraftfahrzeug-Griffeinrichtung zu erhöhen, ist in einer weiteren Ausgestaltung der Erfindung vorgesehen, dass ein Elektronikmodul innerhalb des Aufnahmeraumes untergebracht angeordnet ist, wobei das wenigstens eine Kabel zusätzlich zur Übertragung von Informationen dienend ausgebildet ist und mit dem Elektronikmodul verbunden ist. Das Elektronikmodul kann dabei beispielsweise zu einer Überprüfung eines Zugangs für einen berechtigen und einen ID-Geber verwendenden Benutzer dienen, wie es aus dem Stand der Technik bekannt ist, so dass an dieser Stelle nicht weiter auf diese Funktionalität eingegangen werden braucht.

Erfindungsgemäß ist ferner vorgesehen, dass das Lichtmodul zwischen dem Elektronikmodul und dem Lagerungsarm liegend innerhalb des Aufnahmeraumes angeordnet ist. Diese Anordnung ist beispielsweise für eine Muldenbeleuchtung besonders günstig, da das Lichtmodul damit die geringste Entfernung zum Schwenkpunkt des Griffkörpers in Form des freien Endes des Lagerungsarms aufweist, so dass bei ausgeschwenktem Griffkörper die Intensität des von dem Lichtmodul ausgestrahlten Lichts nicht speziell angepasst werden muss, da sich die Lage des Lichtmoduls in Bezug auf die Griffmulde nur unwesentlich bei Verschwenkung der des Griffkörpers der Kraftfahrzeug-Griffeinrichtung ändert.

Schließlich ist es im Hinblick auf einen einfachen und unkomplizierten Austausch von Lichtmodul und/oder Elektronikmodul von besonderem Vorteil, wenn eine den Aufnahmeraum verschließend ausgebbildete Griffblende an dem Griffkörper lösbar befestigt ist. Da die Griffblende ein Design-Element darstellt, kann damit ferner ein universell verwendbarer Griffkörper mit einer für ein entsprechend angepasstes Kraftfahrzeug ausgebildeten Griffblende kombiniert werden.

Es versteht sich, dass die vorstehend genannten und nachstehenden noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen. Der Rahmen der Erfindung ist nur durch die Ansprüche definiert.

Weitere Einzelheiten, Merkmale und Vorteile des Gegenstandes der Erfindung ergeben sich aus der nachfolgenden Beschreibung im Zusammenhang mit der Zeichnung, in der ein beispielhaftes und bevorzugtes Ausführungsbeispiel der Erfindung dargestellt ist.

In der Zeichnung zeigt:
Figur 1 eine perspektivische Vorderansicht auf eine erfindungsgemäße Kraftfahrzeug-Griffeinrichtung,
Figur 2 eine perspektivische Rückansicht auf die erfindungsgemäße Kraftfahrzeug-Griffeinrichtung,
Figur 3 eine weitere perspektivische Vorderansicht auf die erfindungsgemäße Kraftfahrzeug-Griffeinrichtung, bei welcher eine Griffblende nicht dargestellt ist,
Figur 4 eine perspektivische Einzelteildarstellung der erfindungsgemäßen Kraftfahrzeug-Griffeinrichtung,
Figur 5 eine weitere Perspektivansicht auf die in Figur 3 gezeigte Kraftfahrzeug-Griffeinrichtung,
Figur 6 eine perspektivische Detailansicht auf einen Griffkörper der erfindungsgemäßen Kraftfahrzeug-Griffeinrichtung, wobei an dem Griffkörper ein Lichtmodul und ein Kabelführungselement angeordnet sind,
Figur 7 eine perspektivische Ansicht auf einen Anschlussstecker, das Lichtmodul und einen Steckverbinder, wobei Kabel den Anschlussstecker mit dem Lichtmodul und dem Steckverbinder verbinden,
Figur 8 eine perspektivische Ansicht auf das Lichtmodul der erfindungsgemäßen Kraftfahrzeug-Griffeinrichtung,
Figur 9 eine perspektivische Ansicht auf das Lichtmodul und das daran festgelegte Kabelführungselement, und
Figur 10 eine perspektivische und zu Teil geschnittene Detailansicht auf einen Kanal, in welchem das Kabelführungselement angeordnet ist.

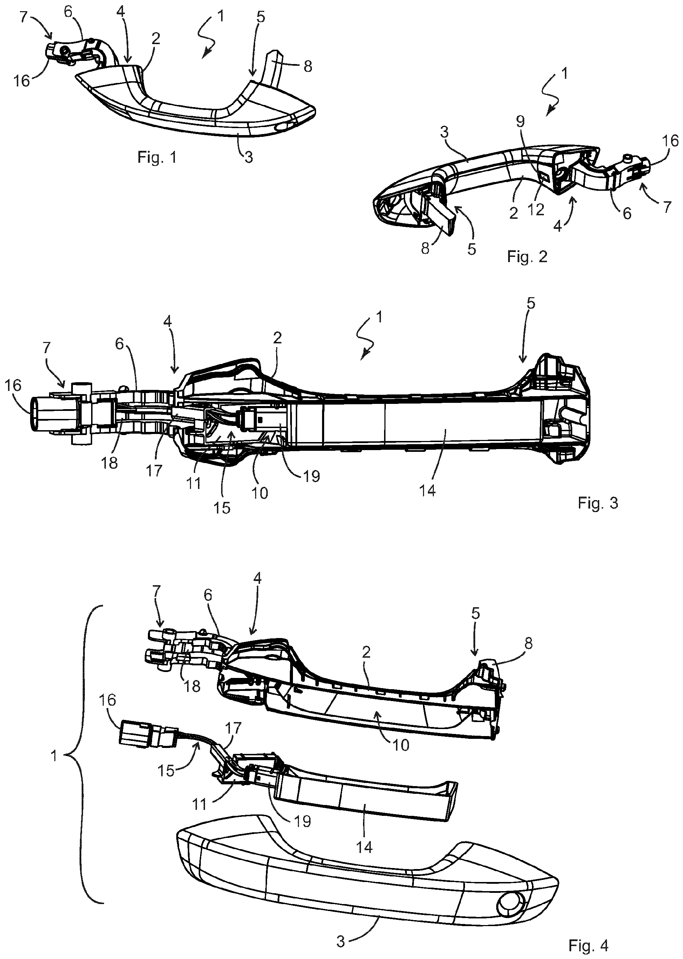

In Figur 1 ist eine erfindungsgemäße Kraftfahrzeug-Griffeinrichtung 1 in einer perspektivischen Draufsicht dargestellt, wohingegen die Figur 2 eine perspektivische Rückansicht auf die Kraftfahrzeug-Griffeinrichtung 1 zeigt. Mit Bezug auf die Figuren 1 und 2 weist die Kraftfahrzeug-Griffeinrichtung 1 einen Griffkörper 2 und eine lösbar an dem Griffkörper 2 befestigte Griffblende 3 auf. Dabei weist der Griffkörper 2 ein erstes Längsende 4 und ein zweites Längsende 5 auf. Wie den Figuren 1 und 2 ferner zu entnehmen ist, ragt von dem ersten Längsende 4 ein Lagerungsarm 6 ab, welcher ein freies Ende 7 aufweist. Das freie Ende 7 des Lagerungsarms 6 ist zur schwenkbaren Lagerung des Griffkörpers 2 ausgebildet. Insbesondere ist der Lagerungsarm 6 abgewinkelt ausgebildet. In dem dargestellten Ausführungsbeispiel ist der Lagerungsarm 6 im Wesentlichen L-förmig ausgebildet, wobei auch andere Formen denkbar sind. Von dem zweiten Längsende 5 des Griffkörpers 2 erstreckt sich ein Griffhaken 8, welcher beispielsweise mit einer Schließeinrichtung eines Kraftfahrzeugs gekoppelt werden kann, so dass eine Verschwenkung des Griffkörpers 2 zum Beispiel eine Entriegelung einer Kraftfahrzeugtür bewirken kann. Wie aus der Figur 2 ersichtlich ist, ist in dem Griffkörper 2 eine Ausnehmung 9 ausgebildet, durch welche Licht zur Beleuchtung einer Griffmulde und/oder zur Vorfeldbeleuchtung einer Kraftfahrzeugtür ausgestrahlt werden kann. Daher ist die Ausnehmung 9 auf einer der Griffblende 3 abgewandten Seite des Griffkörpers 2 ausgebildet.

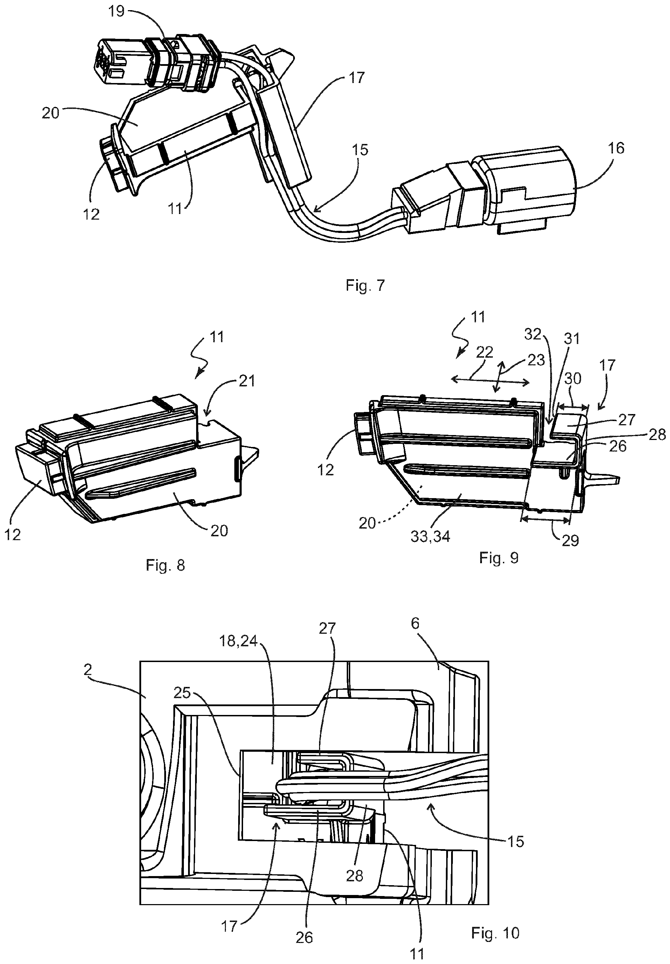

Die Figur 3 zeigt eine Vorderansicht auf die Kraftfahrzeug-Griffeinrichtung 1, wobei in dieser Darstellung die Griffblende 3 nicht dargestellt und somit von dem Griffkörper 2 entfernt ist. In Figur 4 ist schließlich eine Einzelteildarstellung der Kraftfahrzeug-Griffeinrichtung 1 in einer Perspektivansicht gezeigt. Wie den Figuren 3 und 4 zu entnehmen ist, weist der Griffkörper 2 ferner einen Aufnahmeraum 10 auf. Der Aufnahmeraum 10 ist dabei zwischen dem ersten Längsende 4 und dem zweiten Längsende 5 ausgebildet und erstreckt sich zwischen dem ersten Längsende 4 und dem zweiten Längsende 5. Ferner weist die Kraftfahrzeug-Griffeinrichtung 1 ein Lichtmodul 11 mit einem Lichtaustrittsbereich 12 auf, von welchem aus Licht zur Beleuchtung ausgestrahlt wird. Der Lichtaustrittsbereich 12 des Lichtmoduls 11 ist zum Beispiel aus der Figur 8 ersichtlich, in welcher das Lichtmodul 11 in einer Perspektivansicht dargestellt ist. Das Lichtmodul 11 ist innerhalb des Aufnahmeraumes 10 derart untergebracht angeordnet, dass der Lichtaustrittsbereich 12 in der Ausnehmung 9 des Griffkörpers 2 angeordnet ist. In dem in sämtlichen Figuren dargestellten Ausführungsbeispiel weist die Kraftfahrzeug-Griffeinrichtung 1 ferner ein Elektronikmodul 14 auf, welches innerhalb des Aufnahmeraumes 10 des Griffkörpers 2 untergebracht angeordnet ist und welches beispielsweise zur Überprüfung eines Zugangs eines berechtigten Benutzers ausgebildet ist. Dabei kann das Elektronikmodul 14 zum Beispiel mit einem Sensor und/oder Kommunikationseinrichtung ausgestattet sein, um mit einem ID-Geber kommunizieren zu können. Aus der Figur 3 geht hervor, dass das Lichtmodul 11 zwischen dem Elektronikmodul 14 und dem Lagerungsarm 6 liegend innerhalb des Aufnahmeraumes 10 angeordnet und in dem Aufnahmeraum 10 fixiert ist. Die lösbar an dem Griffkörper 2 befestigte Griffblende 3 verschließt dabei im zusammengebauten Zustand der Kraftfahrzeug-Griffeinrichtung 1 den Aufnahmeraum 10 und deckt damit das Lichtmodul 11 und das Elektronikmodul 14 schützend ab.

Aus den Figuren 3 und 4 sind ferner zur Kraftfahrzeug-Griffeinrichtung 1 gehörende Kabel 15 ersichtlich, welche zur Übertragung von Energie und/oder von Informationen dienen und einen an dem freien Ende 7 des Lagerungsarms 6 angebrachten Anschlussstecker 16 sowohl mit dem Lichtmodul 11 als auch mit dem Elektronikmodul 14 verbinden, so dass eine Versorgung des Lichtmoduls 11 und des Elektronikmoduls 14 über die Kabel 15 und den Anschlussstecker 16 sichergestellt ist. Dabei wird das Lichtmodul 11 zur Erzeugung von Licht und das Elektronikmodul 14 zum Betrieb mit Energie versorgt, wohingegen Informationen, welche das Elektronikmodul 14 beispielsweise im Zuge einer Überprüfung eines Zugangs für einen berechtigten Benutzer generiert, über die Kabel 15 und den Anschlussstecker 16 zu einer Steuerungseinheit eines Kraftfahrzeugs geleitet und dort weiterverarbeitet werden können. In Figur 7 ist die vorstehend beschriebene Verkabelung mit Ausnahme des Elektronikmoduls 14 gezeigt, wobei ein Steckverbinder 19 (siehe zum Beispiel Figur 7) die Kabel 15 mit dem Elektronikmodul 14 verbindet. Es versteht sich, dass abweichend von dem konkreten Ausführungsbeispiel statt mehrerer Kabel 15 alternativ auch nur ein einziges Kabel vorgesehen sein kann, solange dieses eine Kabel zur Übertragung von Energie und von Informationen geeignet ausgebildet ist. Ebenso ist es denkbar, dass statt eines Steckverbinders 19 auch ein offenes Kabelende oder ein umspritzter Kontakt vorliegt und mit dem Elektronikmodul 14 verbunden ist.

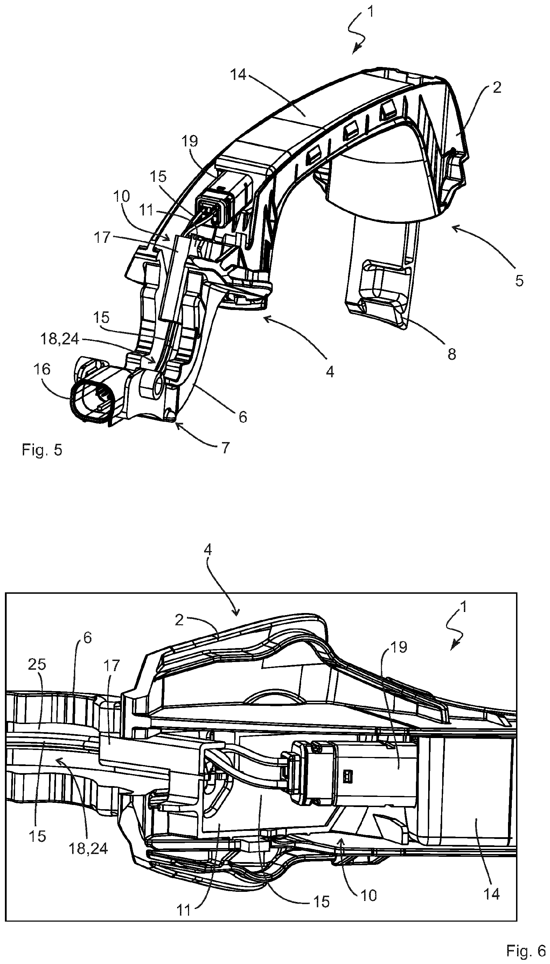

Erfindungsgemäß weist die Kraftfahrzeug-Griffeinrichtung 1 ein Kabelführungselement 17 auf, welches aus den Figuren 3 bis 7, 9 und 10 ersichtlich ist. Das Kabelführungselement 17 ist an dem Lichtmodul 11 festgelegt und erstreckt sich zumindest abschnittweise in den Lagerungsarm 6 hinein. In dem Lagerungsarm 6 ist ein Kanal 18 ausgebildet, welcher sich von dem Aufnahmeraum 10 bis hin zu dem freien Ende 7 des Lagerungsarms 6 erstreckt (siehe zum Beispiel Figuren 3 und 5). Der Kanal 18 ist als eine schlitzförmige Aussparung 24 mit einer Bodenwandung 25 in dem Lagerungsarm 6 ausgebildet, wie es beispielsweise der Figur 6 zu entnehmen ist. Dabei sind in dem Kanal 18 die Kabel 15 verlaufend angeordnet, wobei die Kabel 15 von dem Anschlussstecker 16 durch den Kanal 18 über das Lichtmodul 11 bis zu dem Elektronikmodul 14 verlaufen (siehe beispielsweise Figuren 3, 5, 6 und 10). Hierbei zeigt Figur 5 eine seitliche Perspektivansicht auf die erfindungsgemäße Kraftfahrzeug-Griffeinrichtung 1, wohingegen die Figuren 6 und 10 Details zu der Anordnung von Lichtmodul 11, Elektronikmodul 14, Kabel 15 und Kabelführungselement 17 zeigen. Das Kabelführungselement 17 führt abschnittsweise das/die Kabel 15 und richtet das/die Kabel 15 derart aus, dass das/die Kabel 15 innerhalb des Kanals 18 liegend verlaufen bzw. dass das/die Kabel 15 in der Aussparung 24 geschützt verlaufend untergebracht sind und sich innerhalb der Aussparung 24 bis hin zu dem Anschlussstecker 16 erstrecken.

In Figur 8 ist das Lichtmodul 11 in einer perspektivischen Ansicht dargestellt. Das Lichtmodul 11 ohne das daran festgelegte Kabelführungselement 17 dargestellt. Das Lichtmodul 11 weist einen Grundkörper 20 auf, von welchem aus sich der in der Ausnehmung 9 des Griffkörpers 2 angeordnete Lichtaustrittsbereich 12 erstreckt. Ferner ist aus Figur 8 zu erkennen, dass das Lichtmodul 11 mit einer Stufe 21 ausgebildet ist, auf welcher das Kabelführungselement 17 zumindest abschnittsweise festgelegt ist. Die an dem Grundkörper 20 des Lichtmoduls 11 ausgebildete Stufe 21 ist auf einer dem Lichtaustrittsbereich 12 abgewandten Seite des Lichtmoduls 11 ausgebildet. Dabei erstreckt sich das an der Stufe 21 des Lichtmoduls 11 festgelegte Kabelführungselement 17 quer zu der Längserstreckung 22 des Lichtmoduls 11.

Wie beispielsweise der Figur 10 zu entnehmen ist, ist das Kabelführungselement 17 länglich verlaufend ausgebildet und weist eine Längserstreckung 23 auf, die größer als seine Höhe und Breite ist. Ferner ist das Kabelführungselement 17 mit einem ersten Schenkel 26, einem zweiten Schenkel 27 und einem Verbindungsschenkel 28 ausgebildet (siehe zum Beispiel Figuren 9 und 10). Der Verbindungsschenkel 28 verbindet den ersten Schenkel 26 und den zweiten Schenkel 27 miteinander (siehe Figuren 9 und 10). Bei dem dargestellten Ausführungsbeispiel erstreckt sich der zweite Schenkel 27 parallel zu dem ersten Schenkel 26, wobei aber auch eine nicht parallele Erstreckung des ersten Schenkels 26 zu dem zweiten Schenkel 27 denkbar ist. Wie ferner die Figuren 6 und 10 zeigen, sind die Kabel 15 zwischen der Bodenwandung 25 der schlitzförmigen Aussparung 24 in dem Lagerungsarm 6 und dem Verbindungsschenkel 28 verlaufend angeordnet. Der erste Schenkel 26 weist im Querschnitt betrachtet eine Längserstreckung 29 aufweist, welche größer ist als eine Längserstreckung 30 des zweiten Schenkels 27 (siehe Figuren 9 und 10). Wie insbesondere aus der Figur 9 ersichtlich ist, ist der erste Schenkel 26 an dem Lichtmodul 11 festgelegt, wobei zwischen dem Lichtmodul 11 und einem freien Ende 31 des zweiten Schenkels 27 ein Spalt 32 ausgebildet ist. Genauer gesagt ist der erste Schenkel 26 des Kabelführungselements 17 zumindest abschnittsweise an der Stufe 21 des Grundkörpers 20 des Lichtmoduls 11 angeordnet und festgelegt.

Mit Bezug auf Figur 9 ist schließlich gezeigt, dass das Kabelführungselement 17 an dem Grundkörper 20 des Lichtmoduls 11 festgelegt ist. Insbesondere ist das Kabelführungselement 17 zumindest abschnittsweise an der Stufe 21 des Lichtmoduls 11 festgelegt. Entsprechend dem dargestellten Ausführungsbeispiel ist das Kabelführungselement 17 an dem Grundkörper 20 angespritzt angeformt, wobei für die einstückige Einheit aus Lichtmodul 11 und Kabelführungselement 17 ein Spritzguss-Verfahren verwendet wird, bei welchem das Kabelführungselement 17 und das Lichtmodul 11 als ein einziges Spritzguss-Teil einstückig hergestellt sind. Dabei muss zumindest für den Lichtaustrittsbereich 12 ein transparentes Material 33 verwendet werden, was mittels eines Mehrkomponenten-Spritzgießens realisiert werden kann, so dass zumindest für den Lichtaustrittsbereich 12 des Lichtmoduls 11 eine erste Materialkomponente, d.h. ein transparentes Material 33, verwendet wird und für das Kabelführungselement 17 und ggf. für den übrigen Bereich des Lichtmoduls 11 eine zweite Materialkomponente verwendet wird.

Die beschriebene Erfindung ist selbstverständlich nicht auf die beschriebene und dargestellte Ausführungsform beschränkt. Es ist ersichtlich, dass an der in der Zeichnung dargestellten Ausführungsform zahlreiche, dem Fachmann entsprechend der beabsichtigten Anwendung naheliegende Abänderungen vorgenommen werden können, ohne dass dadurch der Bereich der Erfindung verlassen wird. Zur Erfindung gehört alles dasjenige, was in der Beschreibung enthalten und/oder in der Zeichnung dargestellt ist, einschließlich dessen, was abweichend von dem konkreten Ausführungsbeispiel für den Fachmann naheliegt.

## Patentansprüche

1. Kraftfahrzeug-Griffeinrichtung (1), aufweisend einen Griffkörper (2) mit einem ersten Längsende (4), einem zweiten Längsende (5), wenigstens einer Ausnehmung (9) und einem Aufnahmeraum (10), welcher an dem Griffkörper (2) zwischen dem ersten Längsende (4) und dem zweiten Längsende (5) ausgebildet ist, ein Lichtmodul (11), welches innerhalb des Aufnahmeraumes (10) untergebracht angeordnet ist und wenigstens ein Kabel (15), welches zumindest zur Übertragung von Energie dienend ausgebildet ist und welches mit dem Lichtmodul (11) verbunden ist, wobei von dem ersten Längsende (4) ein Lagerungsarm (6) mit einem freien Ende (7), welches zur schwenkbaren Lagerung des Griffkörpers (2) ausgebildet ist, abragt,
wobei in dem Lagerungsarm (6) ein Kanal (18) als eine schlitzförmige Aussparung (24) mit einer Bodenwandung (25) ausgebildet ist, welcher sich von dem Aufnahmeraum (10) bis hin zu dem freien Ende (7) des Lagerungsarms (6) erstreckt und in welchem das wenigstens eine Kabel (15) verlaufend angeordnet ist, **dadurch gekennzeichnet, dass** das Lichtmodul wenigstens einen in der wenigstens einen Ausnehmung (9) angeordneten Lichtaustrittsbereich (12) aufweist,
dass ein Kabelführungselement (17) an dem Lichtmodul (11) festgelegt ist und sich zumindest abschnittsweise in den Lagerungsarm (6) hinein erstreckt, und wobei das Kabelführungselement (17) abschnittsweise das wenigstens eine Kabel (15) führt und derart ausrichtet, dass das wenigstens eine Kabel (15) innerhalb des Kanals (18) in der Aussparung (24) geschützt verlaufend angeordnet ist.

2. Kraftfahrzeug-Griffeinrichtung (1) nach Anspruch 1, **dadurch gekennzeichnet, dass** das Lichtmodul (11) einen Grundkörper (20) aufweist, an welchem das Kabelführungselement (17) angespritzt angeformt ist.

3. Kraftfahrzeug-Griffeinrichtung (1) nach Anspruch 1 oder 2, **dadurch gekennzeichnet, dass** das Lichtmodul (11) einen Grundkörper (20) aufweist, welcher zumindest abschnittsweise im Bereich des wenigstens einen Lichtaustrittsbereichs (12) von einem transparenten Material (33) ausgebildet ist.

4. Kraftfahrzeug-Griffeinrichtung (1) nach Anspruch 1 oder 2, **dadurch gekennzeichnet, dass** das Lichtmodul (11) einen Grundkörper (20) aufweist, welcher eine Schutzhülle (34) ausbildet, wobei die Schutzhülle (34) zumindest abschnittsweise im Bereich des wenigstens einen Lichtaustrittsbereichs (12) von einem transparenten Material (33) ausgebildet ist.

5. Kraftfahrzeug-Griffeinrichtung (1) nach einem der vorhergehenden Ansprüche, **dadurch gekennzeichnet, dass** der Kanal (18) des Lagerungsarms (6) als schlitzförmige Aussparung (24) mit einer Bodenwandung (25) in dem Lagerungsarm (6) ausgebildet ist, wobei das Kabelführungselement (17) mit einem ersten Schenkel (26), einem zweiten Schenkel (27) und einem Verbindungsschenkel (28), welcher den ersten Schenkel (26) und den zweiten Schenkel (27) miteinander verbindet, ausgebildet ist, und wobei das wenigstens eine Kabel (15) zwischen der Bodenwandung (25) und dem Verbindungsschenkel (28) verlaufend angeordnet ist.

6. Kraftfahrzeug-Griffeinrichtung (1) nach Anspruch 5, **dadurch gekennzeichnet, dass** im Querschnitt betrachtet der erste Schenkel (26) eine Längserstreckung (29) aufweist, welche größer ist als eine Längserstreckung (30) des zweiten Schenkels (27), wobei der erste Schenkel (26) an dem Lichtmodul (11) festgelegt ist und wobei zwischen dem Lichtmodul (11) und einem freien Ende (31) des zweiten Schenkels (27) ein Spalt (32) ausgebildet ist.

7. Kraftfahrzeug-Griffeinrichtung (1) nach Anspruch 6, **dadurch gekennzeichnet, dass** das Lichtmodul (11) mit einer Stufe (21) ausgebildet ist, wobei der erste Schenkel (26) zumindest abschnittsweise an der Stufe (21) festgelegt ist.

8. Kraftfahrzeug-Griffeinrichtung (1) nach einem der vorhergehenden Ansprüche, **dadurch gekennzeichnet, dass** ein Elektronikmodul (14) innerhalb des Aufnahmeraumes (10) untergebracht angeordnet ist, wobei das wenigstens eine Kabel (15) zusätzlich zur Übertragung von Informationen dienend ausgebildet ist und mit dem Elektronikmodul (14) verbunden ist.

9. Kraftfahrzeug-Griffeinrichtung (1) nach Anspruch 8, **dadurch gekennzeichnet, dass** das Lichtmodul (11) zwischen dem Elektronikmodul (14) und dem Lagerungsarm (6) liegend innerhalb des Aufnahmeraumes (10) angeordnet ist.

10. Kraftfahrzeug-Griffeinrichtung (1) nach einem der vorhergehenden Ansprüche, **dadurch gekennzeichnet, dass** eine den Aufnahmeraum (10) verschließend ausgebbildete Griffblende (3) an dem Griffkörper (2) lösbar befestigt ist.

## Claims

1. Motor vehicle door handle (1), having a handle body (2) with a first longitudinal end (4), a second longitudinal end (5), at least one recess (9) and an accommodation space (10) which is conformed on the handle body (2) between the first longitudinal end (4) and the second longitudinal end (5), a light module (11) which is arranged inside the accommodation space (10), and at least one cable (15), which is designed to serve at least for the transmission of energy and which is connected to the light module (11), wherein a bearing arm (6) with a free end (7) which is designed for the pivotable mounting of the handle body (2) protrudes from the first longitudinal end (4), wherein a channel (18) is formed in the bearing arm (6) as a slot-shaped cavity (24) with a base wall (25) and extends from the accommodation space (10) as far as the free end (7) of the bearing arm (6), and in which the at least one cable (15) is routed, **characterized in that** the light module (11) includes at least one light outlet region (12) arranged in the at least one recess (9), that a cable routing element (17) is fixed on the light module (11) and at least a portion thereof extends into the bearing arm (6), and wherein the cable routing element (17) routes a portion of the at least one cable (15) and aligns it in such manner that the at least one cable (15) is arranged such that it is protected inside the channel (18) over its extension in the cavity (24).

2. Motor vehicle door handle (1) according to Claim 1, **characterized in that** the light module (11) has a base body (20) on which the cable routing element (17) is formed by injection moulding.

3. Motor vehicle door handle (1) according to Claim 1 or 2, **characterized in that** the light module (11) has a base body (20), at least a portion of which in the area of the at least one light outlet region (12) is made from a transparent material (33).

4. Motor vehicle door handle (1) according to Claim 1 or 2, **characterized in that** the light module (11) has a base body (20) which forms a protective cover (34), wherein at least a portion of the protective cover (34) in the area of the at least one light outlet region (12) is made from a transparent material (33).

5. Motor vehicle door handle (1) according to any one of the preceding claims, **characterized in that** the channel (18) of the bearing arm (6) is conformed in the bearing arm (6) as a slot-shaped cavity (24) with a base wall (25), wherein the cable routing element (17) is constructed with a first leg (26), a second leg (27), and a connecting leg (28) which connects the first leg (26) and the second leg (27) to one another, and wherein the at least one cable (15) is arranged to run between the base wall (25) and the connecting leg (28).

6. Motor vehicle door handle (1) according to Claim 5, **characterized in that**, viewed in cross section, the first leg (26) has a longitudinal extension (29) which is greater than a longitudinal extension (30) of the second leg (27), wherein the first leg (26) is fixed to the light module (11) and wherein a gap (32) is formed between the light module (11) and a free end (31) of the second leg (27).

7. Motor vehicle door handle (1) according to Claim 6, **characterized in that** the light module (11) is designed with a step (21), wherein at least a portion of the first leg (26) is fixed to the step (21).

8. Motor vehicle door handle (1) according to any one of the preceding claims, **characterized in that** an electronics module (14) is arranged within the accommodation space (10), wherein the at least one cable (15) is also designed to serve for the transmission of information and is connected to the electronics module (14) .

9. Motor vehicle door handle (1) according to Claim 8, **characterized in that** the light module (11) is arranged to lie inside the accommodation space (10) between the electronics module (14) and the bearing arm (6) .

10. Motor vehicle door handle (1) according to any one of the preceding claims, **characterized in that** a handle panel (3) designed to enclose the accommodation space (10) is detachably fastened to the handle body (2).

## Revendications

1. Dispositif de préhension pour véhicule automobile (1) comportant un corps de préhension (2) avec une première extrémité longitudinale (4), une deuxième extrémité longitudinale (5), au moins un évidement (9) et un espace de logement (10), lequel est constitué sur le corps de préhension (2) entre la première extrémité longitudinale (4) et la deuxième extrémité longitudinale (5), un module lumineux (11), lequel est disposé implanté à l'intérieur de l'espace de logement (10) et au moins un câble (15), lequel est constitué pour servir à la transmission d'énergie et lequel est relié au module lumineux (11), sachant qu'un bras de positionnement (6) dépasse de la première extrémité longitudinale (4) avec une extrémité libre (7), lequel est constitué pour le positionnement pivotable du corps de préhension (2),
sachant que dans le bras de positionnement (6) est constitué un conduit (18) sous la forme d'une cavité en forme de fente (24) avec une paroi de fond (25), lequel s'étend de l'espace de logement (10) jusqu'à l'extrémité libre (7) du bras de positionnement (6) et dans lequel est disposé au moins un câble (15) passant, **caractérisé en ce que** le module lumineux comporte au moins une zone de sortie de lumière (12) disposée dans au moins un évidement (9),
**en ce qu'**un élément de guidage de câble (17) est fixé au mo**d**ule lumineux (11) et s'étend au moins en partie dans le bras de positionnement (6) et sachant que l'élément de guidage de câble (17) guide et oriente en partie au moins un câble (15) de telle manière qu'au moins un câble (15) est disposé passant de façon protégée à l'intérieur du conduit (18) dans l'évidement (24) .

2. Dispositif de préhension pour véhicule automobile (1) selon la revendication 1, **caractérisé en ce que** le module lumineux (11) comporte un corps de base (20) sur lequel est conformé l'élément de guidage de câble (17) en moulage par injection.

3. Dispositif de préhension pour véhicule automobile (1) selon la revendication 1 ou 2, **caractérisé en ce que** le module lumineux (11) comporte un corps de base (20), lequel est constitué au moins en partie dans la zone d'au moins une zone de sortie de lumière (12) d'un matériau transparent (33).

4. Dispositif de préhension pour véhicule automobile (1) selon la revendication 1 ou 2, **caractérisé en ce que** le module lumineux (11) comporte un corps de base (20), lequel constitue une gaine de protection (34), sachant que la gaine de protection (34) est constituée au moins en partie dans le secteur d'au moins une zone de sortie de lumière (12) d'un matériau transparent (33).

5. Dispositif de préhension pour véhicule automobile (1) selon l'une quelconque des revendications précédentes, **caractérisé en ce que** le conduit (18) du bras de positionnement (6) est constitué dans le bras de positionnement (6) sous la forme d'un évidement en forme de fente (24) avec une paroi de fond (25), sachant que l'élément de guidage de câble (17) est constitué d'une première branche (26), d'une deuxième branche (27) et d'une branche de liaison (28), laquelle relie l'une à l'autre la première branche (26) et la deuxième branche (27) et sachant qu'au moins un câble (15) est disposé passant entre la paroi de fond (25) et la branche de liaison (28).

6. Dispositif de préhension pour véhicule automobile (1) selon la revendication 5, **caractérisé en ce que** vue en coupe, la première branche (26) comporte une extension longitudinale (29), laquelle est plus grande qu'une extension longitudinale (30) de la deuxième branche (27), sachant que la première branche (26) est fixée au module lumineux (11) et sachant qu'un interstice (32) est constitué entre le module lumineux (11) et une extrémité libre (31) de la deuxième branche (27).

7. Dispositif de préhension pour véhicule automobile (1) selon la revendication 6, **caractérisé en ce que** le module lumineux (11) est constitué avec un niveau (21), sachant que la première branche (26) est fixée au moins en partie sur le niveau (21).

8. Dispositif de préhension pour véhicule automobile (1) selon l'une quelconque des revendications précédentes, **caractérisé en ce qu'un** module électronique (14) est disposé implanté à l'intérieur de l'espace de logement (10), sachant qu'au moins un câble (15) est constitué en plus servant à transmettre des informations et est relié au module électronique (14).

9. Dispositif de préhension pour véhicule automobile (1) selon la revendication 8, **caractérisé en ce que** le module lumineux (11) est disposé à plat à l'intérieur de l'espace de logement (10) entre le module électronique (14) et le bras de positionnement (6).

10. Dispositif de préhension pour véhicule automobile (1) selon l'une quelconque des revendications précédentes, **caractérisé en ce qu'**un capot de préhension (3) constitué en fermeture d'un espace de logement (10) est fixé de façon amovible au corps de préhension (2).
